# FASCICULE DE BREVET EUROPEEN

(11) **EP 3 760 490 B1**
(45) Date de publication et mention de la délivrance du brevet: **24.01.2024**
(21) Numéro de dépôt: 20182143.6
(22) Date de dépôt: 25.06.2020
(51) Int. Cl.: B60R 16/033, H02J 7/00

(54) **CIRCUIT ÉLECTRIQUE ET VÉHICULE AUTOMOBILE COMPRENANT UN TEL CIRCUIT**
SCHALTKREIS UND KRAFTFAHRZEUG, DAS EINEN SOLCHEN SCHALTKREIS UMFASST
ELECTRICAL CIRCUIT AND MOTOR VEHICLE COMPRISING SUCH A CIRCUIT

(30) Priorité: 02.07.2019 FR 1907325
(43) Date de publication de la demande: 06.01.2021
(73) Titulaire: Renault s.a.s, 92100 Boulogne Billancourt (FR)
(72) Inventeur: HIRON, Christian, 78690 les essarts le roi (FR)
(74) Mandataire: Renault Group

(56) Documents cités:
- WO-A1-2016/077599
- WO-A2-01/86737
- FR-A1- 3 039 934
- FR-A1- 3 085 322
- JP-A- 2016 088 178

## Description

### Domaine technique de l'invention

La présente invention concerne de manière générale le domaine des circuits électriques d'alimentation pour véhicules automobiles à moteurs à combustion interne.

Elle concerne plus particulièrement un tel circuit électrique, comprenant :
- une première borne à connecter à un démarreur destiné à faire démarrer le moteur à combustion interne du véhicule, pour alimenter ce démarreur en courant électrique,
- au moins une deuxième borne à connecter à un autre appareil électrique du véhicule pour l'alimenter en courant électrique,
- une première batterie électrique, comprenant un module d'accumulateurs connecté à la première borne par l'intermédiaire d'un premier interrupteur commandé et connecté à la deuxième borne par l'intermédiaire d'un deuxième interrupteur commandé, et
- une deuxième batterie électrique, connectée à la deuxième borne.

Elle concerne également un véhicule automobile comprenant un moteur à combustion interne ainsi qu'un circuit électrique d'alimentation tel que présenté ci-dessus.

### Etat de la technique

Dans ce domaine, la demande de brevet FR 1857696 (non encore publiée à la date de dépôt de la présente demande, et qui appartient au déposant de la présente demande) décrit un circuit électrique tel que décrit ci-dessus, et comprenant en outre une unité de commande électronique programmée pour commander les premier et deuxième interrupteurs dans un état d'ouverture lorsque le véhicule automobile est en stationnement prolongé, et pour commander le premier interrupteur dans un état de fermeture en phase de démarrage du moteur à combustion interne.

Lors d'un stationnement prolongé, des appareils électriques du véhicule, dont son unité de commande électronique, consomment un courant électrique de veille (généralement faible, parfois appelé courant « off »). Dans le circuit électrique du document mentionné ci-dessus, ce courant électrique de veille est fourni par la deuxième batterie, employée en quelque sorte en tant que batterie de réserve. Quant à la première batterie, plus performante mais de capacité moindre, elle est employée en tant que batterie de démarrage. Lors d'un stationnement prolongé, elle ne débite pas de courant, si bien que sa charge est préservée en vue du démarrage.

Par ailleurs, dans le document FR 1857696, lorsque la deuxième batterie, de réserve, a été rechargée et que le véhicule se déplace, un mode de fonctionnement dit « micro-hybride » est prévu pour le véhicule, afin d'économiser du carburant. Dans ce mode de fonctionnement :
- lors d'un freinage du véhicule, une partie de l'énergie cinétique du véhicule est convertie par l'alternateur du véhicule en énergie électrique pour la stocker dans la première batterie; l'alternateur, qui fonctionne en récupération, participe alors au freinage du véhicule;
- et, au contraire, lorsque le rendement du moteur à combustion interne est faible (par exemple lors d'une forte accélération), l'alternateur est piloté de manière à délivrer très peu, voire aucun courant électrique, les appareils électriques du véhicule étant alors alimentés par la première batterie.

Quant à la deuxième batterie, elle est déconnectée du circuit électrique et ne délivre ni ne reçoit de courant. Cette déconnexion est souhaitable car c'est la première batterie, et non la deuxième, qui est bien adaptée pour récupérer efficacement le courant électrique produit, sous la forme d'un pic intense mais bref, lors d'un freinage en récupération.

Cette configuration n'est toutefois pas optimale en termes de fiabilité. En effet, en cas de défaillance de l'alternateur et de la première batterie, pour continuer à alimenter les appareils électriques du véhicule et permettre un arrêt en sécurité, il faut alors reconnecter la deuxième batterie électrique au reste du circuit électrique. Et vu les temps de réponse typiques de relais de puissance, cette reconnexion fait perdre un temps qui peut être précieux dans une situation d'urgence ou de défaillance du véhicule.

Et quoi qu'il en soit, cette configuration implique de re-coupler la deuxième batterie avec la première batterie lorsque l'on souhaite ensuite les connecter en parallèle l'une de l'autre. Vu la différence entre les tensions aux bornes de ces deux batteries, un tel re-couplage s'accompagne généralement d'un fort transfert de charge entre les deux batteries, transfert qui est non souhaité et source de pertes,

Le document FR 3 039 934 A1 divulgue un procédé de gestion de l'alimentation électrique d'un véhicule automobile.

### Présentation de l'invention

Afin de remédier aux inconvénients précités de l'état de la technique, la présente invention propose un circuit électrique pour un véhicule automobile, tel que décrit en préambule, dans lequel l'unité de commande est programmée pour :
- commander les premier et deuxième interrupteurs dans un état d'ouverture lorsque le véhicule automobile est en stationnement prolongé,
- commander le premier interrupteur dans un état de fermeture en phase de démarrage du moteur à combustion interne, et
- dans au moins un mode de fonctionnement du véhicule pour lequel le véhicule se déplace, commander le deuxième interrupteur dans un état de fermeture de manière à connecter les première et deuxième batteries l'une à l'autre en parallèle, et dans lequel
- les première et secondes batteries sont telles que, lorsque le niveau de charge de la deuxième batterie est dans un intervalle correspondant à une charge complète, la tension électrique en circuit ouvert aux bornes de la deuxième batterie est égale à la tension électrique en circuit ouvert aux bornes de la première batterie alors que le niveau de charge de la première batterie est dans un intervalle correspondant à une charge partielle.

Connecter les première et deuxième batteries en parallèle l'une de l'autre impose, pertes résistives mises à part, que les tensions à leurs bornes respectives soient quasiment identiques. Vu les caractéristiques électriques des batteries indiquées ci-dessus, lorsqu'elles sont connectées en parallèle l'une de l'autre, on obtient donc après recharge une situation dans laquelle le niveau de charge de la deuxième batterie est dans un intervalle correspondant à une charge complète, alors que le niveau de charge de la première batterie est dans un intervalle correspondant à une charge partielle.

Dans cette situation, en cas de fonctionnement en mode micro-hybride, c'est alors essentiellement la première batterie qui va se décharger/recharger lors des phases successives d'accélération/freinage en récupération (puisqu'elle n'est que partiellement chargée), tandis que la charge de la deuxième batterie ne variera que très peu, cette dernière restant quasiment complètement chargée.

Cela est particulièrement intéressant puisque :
- la première batterie, c'est-à-dire la batterie de démarrage, est intrinsèquement plus adaptée que la deuxième batterie pour accepter puis débiter un courant électrique sous la forme de pics intenses mais brefs,
- tandis que la deuxième batterie, qui est une batterie de réserve destinée à assurer la consommation électrique du véhicule lors d'un stationnement prolongé, doit de préférence restée presque complètement chargée (au cas où le conducteur décide subitement de mettre le véhicule en stationnement).

Dans ce circuit électrique, il est donc possible d'obtenir un fonctionnement micro-hybride efficace en termes de récupération d'énergie, et n'entraînant pas de diminution notable de la charge de la deuxième batterie, tout en conservant les première et deuxième batteries connectées en parallèle. Bien sûr, conserver ainsi ces deux batteries connectées évite le problème de temps de reconnexion mentionné plus haut (en cas de défaillance de la première batterie). Et le fort courant et les pertes que pourrait entraîner une reconnexion des deux batteries sont aussi éliminés, puisque ces deux batteries restent connectées l'une à l'autre.

A titre de comparaison, dans le circuit électrique du document de l'état de la technique FR 1857696, pour une même tension commune, c'est au contraire la deuxième batterie, de réserve, qui n'est que partiellement chargée alors que la première batterie, de démarrage, est alors presque complètement chargée. Dans le circuit décrit dans ce document, si la deuxième batterie était connectée elle aussi au circuit électrique, en parallèle de la première, lors d'un fonctionnement en mode micro-hybride, ce serait alors essentiellement la deuxième batterie qui se déchargerait puis se chargerait et ainsi de suite lors de l'alternance des phases de freinage en récupération puis d'accélération, tandis que la première batterie resterait essentiellement complètement chargée. Cela ne permettrait qu'une récupération d'énergie médiocre, puisque la deuxième batterie est moins adaptée que la première pour récupérer une énergie électrique fournie sous forme de pics de courants intenses mais brefs. En outre, en cas de mise en stationnement inopinée du véhicule, cela pourrait conduire à une situation dans laquelle le stationnement débute avec une deuxième batterie chargée seulement partiellement.

Avantageusement aussi, sur au moins une plage de tension électrique en circuit ouvert correspondant à une charge complète de la deuxième batterie, une même variation de tension électrique en circuit ouvert correspond, pour la première batterie, à une première variation de niveau de charge, et, pour la deuxième batterie, à une deuxième variation de niveau de charge inférieure à la première variation de niveau de charge.

Il est prévu aussi que le circuit électrique comprenne un alternateur à accoupler au moteur à combustion interne, et que l'unité de commande électronique soit programmée pour, dans ledit mode de fonctionnement, piloter l'alternateur pour que la tension électrique de bord qu'il délivre soit :
- supérieure aux tensions électriques aux bornes des première et deuxième batteries lorsqu'un freinage est détecté ou lorsqu'une diminution du couple moteur demandé par le conducteur du véhicule est détectée, et soit
- inférieure aux tensions électriques aux bornes des première et deuxième batteries lorsqu'il est déterminé qu'un rendement du moteur à combustion interne est inférieur à un rendement seuil donné.

Il est prévu aussi que :
- la courbe représentant la tension électrique en circuit ouvert aux bornes de la première batterie en fonction de son niveau de charge, et la courbe représentant la tension électrique en circuit ouvert aux bornes de la deuxième batterie en fonction de son niveau de charge se croisent pour un seuil de niveau de charge compris entre 45 pour cent et 75 pour cent, et que,
- en dessous dudit seuil de niveau de charge, et sur au moins une plage de niveau de charge, à niveau de charge égal, la tension électrique en circuit ouvert de la deuxième batterie soit supérieure à la tension électrique en circuit ouvert de la première batterie.

Il est prévu aussi qu'un écart relatif entre :
- la tension électrique en circuit ouvert aux bornes de la première batterie lorsque son niveau de charge est de 50 pour cent d'une part, et
- la tension électrique en circuit ouvert aux bornes de la deuxième batterie lorsque son niveau de charge est de 80 pour cent d'autre part,
soit inférieur à 5 pour cent.

Il est prévu aussi que, le circuit électrique comprenant l'alternateur à accoupler au moteur à combustion interne, l'unité de commande électronique soit est programmée pour :
- après un démarrage à froid du moteur à combustion interne, commander le deuxième interrupteur dans son état d'ouverture et piloter l'alternateur de manière à ce qu'il recharge la deuxième batterie,
- puis pour piloter l'alternateur de manière à ce que la tension électrique de bord qu'il délivre prenne une valeur intermédiaire entre la tension électrique aux bornes de la première batterie et la tension électrique aux bornes de la deuxième batterie,
- puis pour commander le deuxième interrupteur dans son état de fermeture.

Avantageusement aussi, le premier interrupteur connecte la première borne du circuit à une borne commune du module d'accumulateurs de la première batterie et le deuxième interrupteur connecte la deuxième borne du circuit à cette même borne commune, de manière à ce que le courant électrique délivré par le circuit par sa première borne traverse seulement le premier interrupteur.

Il est prévu aussi que circuit électrique comprenne un convertisseur de tension électrique dont l'entrée est connectée électriquement à la deuxième batterie et dont la sortie est connectée électriquement à la première batterie, le convertisseur étant configuré pour délivrer une tension électrique de sortie supérieure à sa tension électrique d'entrée.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

L'invention propose aussi un véhicule automobile comprenant un moteur à combustion interne, des appareils électriques dont un démarreur pour faire démarrer le moteur à combustion interne, et un circuit électrique tel que décrit ci-dessus.

Avantageusement, le véhicule automobile comprend un compartiment moteur dans lequel la première batterie est logée, la deuxième batterie étant logée hors du compartiment moteur.

### Description détaillée de l'invention

La description qui va suivre en regard des dessins annexés, donnés à titre d'exemples non limitatifs, fera bien comprendre en quoi consiste l'invention et comment elle peut être réalisée.

Sur les dessins annexés :
[fig.1] représente schématiquement, vu de dessus, un véhicule automobile mettant en oeuvre les enseignements de l'invention ;
[fig.2] est un schéma électrique représentant les principaux éléments d'un circuit électrique du véhicule de la figure 1 ;
[fig.3] représente schématiquement l'évolution de tensions électriques (en volts) présentées respectivement par une première et une deuxième batterie électriques du circuit de la figure 2, en fonction de leurs niveaux de charge respectifs (exprimés en pourcent) ;
[fig.4] représente schématiquement l'évolution au cours du temps des niveaux de charge respectifs de ces première et deuxième batteries, lors d'un essai de ce couple de batteries sur un banc électrique simulant un trajet du véhicule ;
[fig.5] représente schématiquement l'évolution, en fonction de la température de la première batterie exprimée en degrés Celsius, d'un niveau de charge minimal de cette batterie au-dessus duquel elle est apte à faire démarrer un moteur à combustion interne du véhicule de la figure 1.

### Véhicule automobile

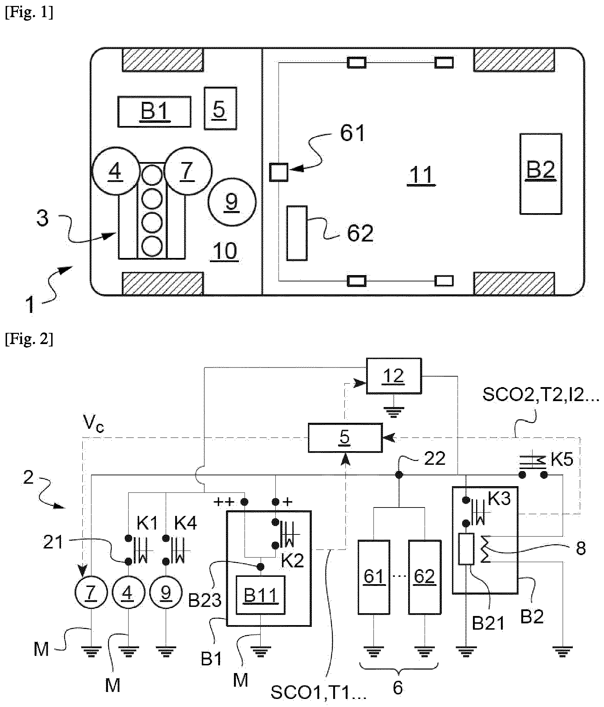

La figure 1 représente schématiquement un véhicule 1 automobile, selon un premier mode de réalisation de l'invention. La propulsion de ce véhicule est assurée par un moteur à combustion interne 3, logé dans un compartiment moteur 10 qui est séparé de l'habitacle 11 et qui est situé sous un capot du véhicule.

Le véhicule 1 comprend différents appareils électriques, notamment :
- un démarreur 4 accouplé au moteur à combustion interne 3,
- un système de chauffage 9 d'un pot catalytique de la ligne d'échappement du véhicule 1,
- une unité de commande 5 électronique du véhicule, et
- des équipements de bord 6 distincts du démarreur 4 (voir figure 2), dont un système électromécanique d'ouverture centralisée 61 du véhicule par commande sans fil, un tableau de bord 62, et, par exemple, un système d'ouverture et de fermeture électrique des vitres.

L'unité de commande 5 du véhicule, est configurée pour acquérir différentes données représentatives de l'état du véhicule (température, présence ou non d'occupants dans le véhicule, niveau de carburant, niveaux de charge et température des batteries électriques...) et éventuellement de sa dynamique (vitesse de déplacement, localisation, etc...). L'unité de commande 5 est configurée aussi pour piloter différents organes du véhicule (afficheurs, système de freinage, injecteurs...).

Une partie des appareils électriques du véhicule 1, notamment l'unité de commande 5 et le système électromécanique d'ouverture centralisée 61, fonctionnent, au moins par intermittence, lorsque le véhicule 1 est en stationnement prolongé. Un courant électrique de veille, en général de l'ordre de quelques milliampères, est donc consommé par ces appareils lorsque le véhicule 1 est en stationnement.

Le véhicule 1 est muni d'un circuit électrique 2 permettant d'alimenter les appareils électriques du véhicule, aussi bien lors d'un trajet effectué par le véhicule que lors d'un stationnement ce celui-ci.

Dans la suite de cet exposé, on définira un « stationnement » comme un état du véhicule dans lequel le moteur à combustion interne est à l'arrêt, et dans lequel le véhicule est immobile. Le terme « connecté » sera par ailleurs employé au sens électrique du terme.

On s'intéressera plus particulièrement au cas d'un « stationnement prolongé ». Un tel stationnement prolongé sera défini comme un état du véhicule dans lequel le moteur à combustion interne 3 est éteint depuis une durée supérieure à une durée limite, égale par exemple à une heure.

### Circuit électrique équipant le véhicule

De manière remarquable, le circuit électrique 2 du véhicule 1 comprend (figure 2) :
- une première batterie B1 d'accumulateurs électrique, destinée notamment à alimenter le démarreur 4 du moteur, et
- une deuxième batterie B2 d'accumulateurs électrique, destinée notamment à fournir le courant électrique de veille lorsque le véhicule est en stationnement prolongé (ce stationnement pouvant durer plusieurs semaines), et servant en quelque sorte de réserve de charge électrique pour le véhicule et pour la première batterie B1.

Employer ainsi deux batteries, dont la première a pour fonction (entre autres) de faire démarrer le moteur combustion interne 3, et dont la deuxième a pour fonction (entre autres) de fournir le courant électrique de veille, permet d'adapter au mieux les caractéristiques de chacune de ces batteries, et leur positionnement dans le véhicule, selon leurs fonctions respectives.

Ainsi, la deuxième batterie B2, qui sert en quelque sorte de réserve de charges électriques, est une batterie de grande capacité, relativement peu coûteuse, alors que la première batterie B1 est une batterie de plus petite capacité, mais plus robuste et plus performante que la deuxième batterie B2.

La première batterie B1 est logée dans le compartiment moteur 10, à proximité du démarreur 4, pour réduire la résistance de connexion entre cette batterie et le démarreur 4 (et limiter ainsi les chutes de tension entre les deux, lors du démarrage du moteur à combustion interne).

La deuxième batterie B2 est logée hors du compartiment moteur 10, pour dégager de la place dans celui-ci. La deuxième batterie B2 est logée plus précisément dans l'habitacle 11 du véhicule, de préférence dans le coffre à bagages.

Les caractéristiques détaillées des première et deuxième batteries seront décrites en détail plus bas, après avoir présenté le circuit électrique 2 dans son ensemble.

Le circuit électrique 2 comprend une deuxième borne 22, pour alimenter en courant électrique au moins l'un, ici l'ensemble des équipements de bord 6 du véhicule. Ces équipements de bord 6 sont connectés électriquement entre cette deuxième borne 22 et une masse électrique M du circuit électrique 2 (cette masse M correspondant en pratique à la masse électrique du réseau de bord du véhicule 1).

De manière comparable, des bornes d'alimentation de l'unité de commande 5 peuvent être connectées, pour l'une à la masse M, et pour l'autre à la deuxième borne 22, afin d'alimenter l'unité de commande en courant électrique (cette connexion n'est pas représentée sur la figure 2).

La deuxième batterie B2 est reliée à la deuxième borne 22, pour pouvoir alimenter les équipements de bord 6 en question.

En l'occurrence, une borne positive du module d'accumulateurs B21 de la deuxième batterie B2 est reliée à la deuxième borne 22, par l'intermédiaire d'un troisième interrupteur commandé, K3, tandis qu'une borne négative de ce module d'accumulateurs est reliée directement, c'est-à-dire sans interrupteur intermédiaire, à la masse M. Lorsque le troisième interrupteur K3 est fermé (c'est-à-dire lorsqu'il est dans son état de fermeture), la deuxième batterie peut ainsi alimenter les équipements de bord 6. Le troisième interrupteur K3 est inclus dans un boitier de la deuxième batterie B2 lors de la fabrication de celle-ci.

Quant à la première batterie B1, elle est reliée (c'est-à-dire connectée électriquement), d'une part, à la deuxième borne 22 (qui est connectée aux équipements de bord 6), et, d'autre part, à une première borne 21 qui est reliée au démarreur 4.

En l'occurrence, une borne positive commune 23 du module d'accumulateurs B11 de la première batterie B1 est connectée :
- d'une part à la première borne 21 du circuit, par l'intermédiaire d'un premier interrupteur commandé, K1, et
- d'autre part, à la deuxième borne 22 du circuit, par l'intermédiaire d'un deuxième interrupteur commandé, K2.

La borne négative du module d'accumulateurs B11 est connectée quant à elle à la masse M du circuit.

Lorsque le premier interrupteur K1 est fermé, la première batterie B1 alimente ainsi le démarreur 4 en courant électrique. Et lorsque le deuxième interrupteur K2 est fermé, la première batterie B1 peut alimenter les équipements de bord 6. On remarque par ailleurs que les première et deuxième batteries B1 et B2 se retrouvent connectées électriquement l'une à l'autre, en parallèle, lorsque les deuxième et troisième interrupteurs K2 et K3 sont fermés.

Le deuxième interrupteur K2 est logé ici dans un boitier de la première batterie B1, ainsi bien sûr que le module d'accumulateurs B11.

La première batterie B1 comprend alors, à l'extérieur de son boitier :
- une première borne positive ++, connectée directement à borne positive commune 23 du module d'accumulateurs (par un simple conducteur électrique, sans interrupteur intermédiaire), cette première borne positive ++ étant reliée à la première borne 21 du circuit par le premier interrupteur K1, à l'extérieur du boitier, et
- une deuxième borne positive +, connectée à la borne positive commune 23 du module d'accumulateurs par l'intermédiaire du deuxième interrupteur K2 (inclus dans le boitier), cette deuxième borne positive + étant connectée directement, à l'extérieur du boitier, à la deuxième borne 22 du circuit.

Le circuit électrique 2 comprend aussi un alternateur 7 accouplé au moteur à combustion interne 3. Une borne négative de l'alternateur 7 est reliée directement à la masse M, et une borne positive de l'alternateur est reliée directement à la deuxième borne 22 du circuit, par un conducteur électrique (sans interrupteur intermédiaire).

Comme expliqué ci-dessus, les premier et deuxième interrupteurs K1 et K2 sont connectés chacun directement à la borne positive commune 23 de la première batterie B1 (en quelque sorte en étoile), plutôt que d'être connectés en série l'un avec l'autre. Le courant électrique de démarrage, débité par la première batterie B1 pour alimenter le démarreur 4 et dont l'intensité atteint couramment 700 à 800 ampères, traverse donc le premier interrupteur K1, mais pas le deuxième interrupteur K2.

Cela réduit les pertes résistives de manière très intéressante, par rapport à un montage en série des premier et deuxième interrupteurs, puisque le courant électrique de démarrage, très intense, traverse alors un seul interrupteur commandé, au lieu de deux.

En outre, grâce à cette disposition, le deuxième interrupteur K2 est traversé seulement par :
- un courant électrique débité par la première batterie B1 pour alimenter les équipements de bord 6 du véhicule, et par
- un courant électrique de charge reçu par la première batterie B1, provenant par exemple par l'alternateur 7, et dont l'intensité dépasse rarement 200 ampères.

Le deuxième interrupteur K2 peut donc être réalisé au moyen d'un modèle d'interrupteur destiné à des intensités plus faibles que celle du courant de démarrage, et donc moins onéreux (ce qui n'est possible avec un montage en série des premier et deuxième interrupteurs).

Le système de chauffage 9 du pot catalytique est connecté lui aussi à la première batterie B1 : sa borne positive est connectée à la borne positive commune 23 de la première batterie B1 par l'intermédiaire d'un quatrième interrupteur commandé, K4, tandis que sa borne négative est connectée à la masse M. La borne positive du système de chauffage 9 est connectée plus précisément à la première borne positive ++ de la première batterie B1, par l'intermédiaire de ce quatrième interrupteur K4.

Le circuit électrique 2 comprend par ailleurs un dispositif de chauffage 8 de la deuxième batterie B2, connecté entre la masse M et la deuxième borne 22 du circuit par l'intermédiaire d'un cinquième interrupteur commandé, K5.

En complément, le circuit électrique 2 peut aussi comprendre un convertisseur de tension électrique, 12, dont l'entrée est connectée électriquement à la deuxième batterie B2 et dont la sortie est connectée électriquement à la première batterie B1. Le convertisseur de tension 12 est configuré pour délivrer une tension électrique de sortie supérieure à sa tension électrique d'entrée. Il s'agit par exemple d'un convertisseur à découpage, c'est-à-dire d'un « hacheur », du type élévateur de tension.

Le convertisseur de tension 12 comprend plus précisément :
- une borne négative commune, connectée à la masse M,
- une borne positive d'entrée, connectée directement à la deuxième borne 22 du circuit, et donc connectée à la borne positive de la deuxième batterie B2 (par l'intermédiaire du troisième interrupteur K3), et
- une borne positive de sortie, connectée à la première borne positive ++ de la première batterie B1.

La tension électrique d'entrée du convertisseur de tension 12 est la différence de potentiel électrique entre sa borne positive d'entrée et sa borne négative commune. Sa tension électrique de sortie est la différence de potentiel électrique entre sa borne positive de sortie et sa borne négative commune.

Le convertisseur de tension 12 peut être mis en fonctionnement, ou être mis à l'arrêt par l'unité de commande électronique 5. Lorsqu'il est à l'arrêt, d'un point de vue électrique, tout se passe comme si le convertisseur était absent, sans influence sur le circuit électrique.

L'élévation de tension procurée par le convertisseur de tension 12 entre son entrée et sa sortie (lorsqu'il est en fonctionnement) permet à la deuxième batterie B2 de recharger complètement la première batterie B1, lorsque cela s'avère nécessaire. Cet aspect est présenté en détail plus bas, dans la section relative au pilotage des interrupteurs et de l'alternateur.

Les différents appareils électriques 4, 5, 6, 8, 9 du véhicule 1 sont aptes à assurer leurs fonctions respectives, au moins partiellement, tant que la tension électrique qui les alimente reste comprise entre une tension nominale minimale Vmin, ici de 10,5 volts, et une tension nominale maximale Vmax, ici de 15 volts (de manière optionnelle, certains de ces appareils peuvent d'ailleurs être munis d'un convertisseur DC/DC régulant la tension électrique qu'ils reçoivent finalement).

L'alternateur 7 est donc configuré pour délivrer une tension électrique de bord Valt, réglable entre ladite tension nominale minimale Vmin et ladite tension nominale maximale Vmax en fonction d'une commande de tension Vc qu'il reçoit de l'unité de commande 5.

Le pilotage des différents interrupteurs commandés, K1 à K5, de la tension électrique de bord Valt délivrée par l'alternateur 7, et du convertisseur de tension 12 est réalisé ici par l'unité de commande 5 du véhicule, comme cela sera expliqué en détail plus bas.

En variante, le circuit électrique qui vient d'être décrit pourrait être équipé d'une unité de commande qui lui soit propre, distincte de l'unité de commande électronique du véhicule et programmée pour piloter les interrupteurs commandés, l'alternateur, et le convertisseur de tension 12 mentionnés ci-dessus.

### Caractéristiques des première et deuxième batteries du circuit électrique

Les caractéristiques des première et deuxième batteries B1 et B2 de ce circuit électrique 2 peuvent maintenant être présentées plus en détail.

Ces deux batteries sont ici des batteries au Lithium. Les technologies employées pour réaliser ces deux batteries sont toutefois nettement différentes l'une de l'autre.

En effet, la première batterie B1 est ici une batterie au Lithium de type « NMC/LTO », c'est-à-dire avec des cathodes composées principalement d'un Oxyde de Cobalt-Lithium-Manganèse-Nickel (« NMC »), et des anodes composées principalement de Titanate de Lithium (« LTO »).

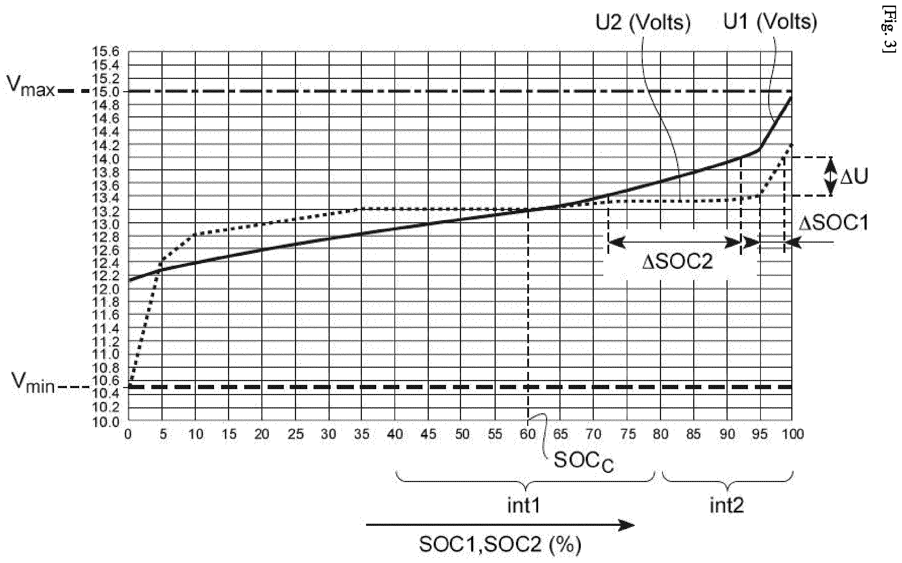

Elle comprend six cellules électrochimiques (c'est-à-dire six couples anode/cathode) connectées en série. Sa tension électrique en circuit ouvert, U1, reste comprise entre la tension nominale minimale Vmin et la tension nominale Vmax sur toute la plage de niveaux de charge comprise entre 0% (batterie complètement déchargée) et 100% (batterie chargée à 100%), comme le montre la figure 3. La première batterie est donc bien adaptée pour alimenter les appareils électriques du véhicule, et elle peut être entièrement rechargée par l'alternateur 7 (puisque la tension nominale maximale Vmax est supérieure à tension électrique aux bornes de la première batterie B1, même pour un niveau de charge de 100% de cette batterie).

Pour ce qui est de la deuxième batterie B2, il s'agit d'une batterie au Lithium du type « LFP/Graphite », c'est-à-dire avec des cathodes composées principalement de Phosphate de Fer Lithié (« LFP »), et des anodes composées principalement de Graphite.

Elle comprend quatre cellules électrochimiques connectées en série.

La figure 3 représente schématiquement l'évolution de tensions électriques en circuit ouvert U1 et U2 (exprimées en volts) entre les bornes de la première batterie B1 et de la deuxième batterie B2, en fonction de leurs niveaux de charge respectifs SOC1 et SOC2, exprimés en pourcentage par rapport à la capacité de charge maximale de la batterie considérée.

Comme on peut le voir sur cette figure, lorsque le niveau de charge SOC2 de la deuxième batterie B2 est dans un intervalle de niveaux de charge int2 correspondant à une charge complète, la tension électrique en circuit ouvert U2 aux bornes de la deuxième batterie B2 est égale à une tension électrique en circuit ouvert U1 aux bornes de la première batterie B1 pour laquelle le niveau de charge de la première batterie SOC1 est dans un intervalle correspondant à une charge partielle int1.

En d'autres termes, pour ce couple de batteries, sur au moins une plage de tension électrique en circuit ouvert, à tension électrique égale, le niveau de charge SOC2 de la deuxième batterie est dans l'intervalle int2 correspondant à une charge complète de la deuxième batterie alors que le niveau de charge SOC1 de la première batterie est dans l'intervalle int1 correspondant à une charge partielle.

Par d'exemple, lorsque les tensions électriques en circuit ouvert des deux batteries sont toutes deux égales à 13,4 volts, le niveau de charge SOC1 de la première batterie B1 vaut 70% (70 pour cent), ce qui correspond à une charge partielle, tandis que le niveau de charge de la deuxième batterie B2 vaut 93%, ce qui correspond à une charge complète. De même, lorsque ces tensions électriques sont toutes deux égales à 13,5 volts, par exemple, le niveau de charge de la première batterie vaut 75% seulement tandis que le niveau de charge de la deuxième batterie vaut 96%.

Ainsi, lorsque les première et deuxième batteries sont connectées en parallèle l'une de l'autre (la tension électrique à leurs bornes étant alors la même, pertes résistives mises à part), on obtient après recharge une situation dans laquelle les niveaux de charge des deux batteries s'équilibrent spontanément de manière à ce que la deuxième batterie soit complètement chargée tandis que la première batterie n'est que partiellement chargée.

Dans cette situation, en cas de fonctionnement en mode micro-hybride, c'est alors essentiellement la première batterie B1 qui va alternativement se décharger puis se recharger et ainsi de suite, lors des phases successives d'accélération puis de freinage en récupération, tandis que la charge de la deuxième batterie B2 ne variera que très peu, cette dernière restant quasiment complètement chargée. En effet, comme la deuxième batterie est totalement ou presque totalement chargée, son aptitude à recevoir et emmagasiner une charge électrique est bien moindre que celle de la première batterie, qui n'est que partiellement chargée, et c'est donc essentiellement avec la première batterie que se feront les échanges d'énergie électrique.

Cela est particulièrement intéressant puisque :
- la première batterie B1, c'est-à-dire la batterie de démarrage, est intrinsèquement plus adaptée que la deuxième batterie B2 pour accepter un courant électrique sous la forme de pics intenses mais brefs (courant produit lors d'un freinage en récupération), et pour emmagasiner l'énergie électrique correspondante,
- tandis que la deuxième batterie B2, qui est une batterie de réserve destinée à assurer la consommation électrique du véhicule 1 lors d'un stationnement prolongé, doit de préférence restée presque complètement chargée (au cas où le conducteur décide subitement de mettre le véhicule en stationnement).

Avec ce circuit électrique 2, il est ainsi possible d'obtenir un fonctionnement micro-hybride efficace en termes de récupération d'énergie et n'entrainant pas de diminution notable de la charge de la deuxième batterie B2, et cela tout en conservant les première et deuxième batteries connectées en parallèle, ce qui préférable en termes de sécurité afin d'assurer en permanence une redondance des sources d'électricité (lorsque le véhicule se déplace). Il est noté que ces performances intéressantes résultent directement de la propriété du couple de batteries mentionnée ci-dessus, et sont obtenues sans avoir à introduire de composants ou systèmes électriques supplémentaires (tels que des hacheurs) entre les deux batteries.

L'intervalle de niveaux de charge int2 mentionné plus haut, qui correspond à une charge complète, s'étend ici de 80% à 100% (un critère plus restrictif, selon lequel cet intervalle s'étend de 90% à 100%, par exemple, pourrait toutefois être employé). En effet, à partir d'un niveau de charge de 80%, la deuxième batterie est considérée comme complètement chargée, et prête à assurer sa fonction de batterie de réserve (même si elle n'est pas nécessairement chargée au maximum de sa capacité de charge). Dans le cadre de la présente demande de brevet, on comprend donc que l'expression "charge complète de la deuxième batterie" (ou "batterie complètement chargée") désigne une charge élevée, mais pas nécessairement totale, de cette batterie. De façon plus générale, une charge sera considérée complète pour un intervalle dépendant du couple de batteries sélectionné. La borne inférieure d'un tel intervalle sera toujours supérieure à 50%, de préférence supérieure à 70%.

L'intervalle de niveaux de charge int1, qui correspond à une charge partielle, s'étend en dessous de l'intervalle de niveaux de charge int2 correspondant à une charge complète. Ici, l'intervalle de niveaux de charge int1 s'étend donc en dessous de 80%, par exemple de 40% à 80%.

Par ailleurs, comme on peut le voir sur la figure 3, le couple de batteries du circuit électrique est tel que, sur une plage de tension électrique en circuit ouvert correspondant à une charge complète de la deuxième batterie B2 (c'est à dire pour laquelle le niveau de charge de la deuxième batterie est l'intervalle int2), une même variation de tension électrique en circuit ouvert ΔU correspond :
- pour la première batterie B1, à une première variation de niveau de charge ΔSOC1, et,
- pour la deuxième batterie B2, à une deuxième variation de niveau de charge ΔSOC2 nettement plus petite que la première variation de niveau de charge ΔSOC1.

Plus précisément, ici, sur tout la plage de tension qui s'étend de 13,4 volts à 14,2 volts environ, une même variation de tension électrique en circuit ouvert ΔU correspond, pour la première batterie B1, à une première variation de niveau de charge ΔSOC1 nettement supérieure à la variation de niveau de charge correspondante ΔSOC2 de la deuxième batterie B2.

A titre d'exemple, une même variation de tension électrique en circuit ouvert ΔU de 0,6 volt, entre 13,4 volts et 14 volts, correspond à une première variation de niveau de charge ΔSOC1 de 20% pour la première batterie B1, alors qu'elle correspond à une deuxième variation de niveau de charge ΔSOC2 de 3,5% seulement pour la deuxième batterie B2.

Ainsi, lorsque les première et deuxième batteries sont connectées en parallèle l'une de l'autre et qu'elles se déchargent progressivement, la tension électrique à leur bornes diminue d'une même quantité, ce qui impose que le niveau de charge de la première batterie B1 diminue nettement plus que celui de la deuxième batterie. Il en est de même lors d'une recharge des deux batteries (d'autant plus que la deuxième batterie est moins apte que la première à accepter un courant électrique de charge, puisqu'elle est presque totalement chargée).

Cette dissymétrie des variations de niveaux de charge des deux batteries, pour une même variation de tension électrique, contribue donc au fait que ce soit principalement la première batterie qui se charge et se décharge, lors d'un fonctionnement en mode micro-hybride avec les deux batteries B1 et B2 connectées en parallèle.

La proximité de la première batterie B1 et de l'alternateur 7 renforce encore cet effet. En effet, la résistance électrique entre l'alternateur 7 et la première batterie B1 est plus faible de celle entre l'alternateur 7 et la deuxième batterie B2, du fait notamment de l'éloignement plus grand de la deuxième batterie, logée hors du compartiment moteur 10 (la différence de résistance en question est de quelques milli-ohms, en pratique). Et cette différence de résistances de connexion favorise une charge de la première batterie plutôt que de la deuxième batterie, lors d'un freinage en récupération.

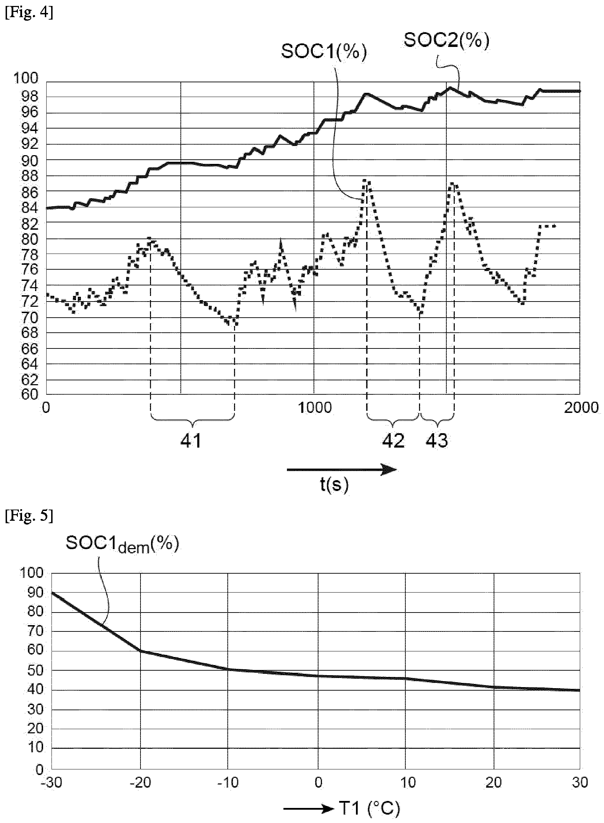

La figure 4 représente l'évolution au cours du temps des niveaux de charge respectifs SOC1 et SOC2 des première et deuxième batteries, lors d'un essai de ce couple de batteries réalisé sur un banc électrique qui simule la consommation électrique des différents appareils électrique du véhicule 1, ainsi que le courant produit par son alternateur 7, pour un exemple de trajet du véhicule. Sur cette figure, les niveaux de charge SOC1 et SOC2 des première et deuxième batteries sont exprimés en pourcentage, par rapport à la capacité de charge maximale de la batterie considérée, et le temps t est exprimé en secondes.

Lors de cet essai, les première et deuxième batteries électriques sont connectées en parallèle l'une avec l'autre, et le banc électrique fournit à cet ensemble de batteries un courant électrique total dont la valeur algébrique est égale à la somme :
- du courant électrique qui serait délivré par l'alternateur, au cours de ce trajet du véhicule, et
- du courant électrique correspondant à la consommation par les autres appareils électriques du véhicule, lors de ce même trajet (ce dernier courant électrique ayant une valeur algébrique négative).

Au cours du trajet simulé par ce banc électrique, le fonctionnement du véhicule est du type micro-hybride, et sa vitesse change fréquemment : des phases de forte accélération alternent avec des phases de forte décélération.

Par exemple, les intervalles temporels 41 et 42 représentés sur la figure 4 correspondent à des phases de forte accélération du véhicule 1, pour lesquelles le rendement du moteur à combustion interne serait faible. Lors de telles phases, la tension de bord Valt délivrée par l'alternateur est pilotée de manière à être inférieure à la tension aux bornes de la première batterie et inférieure à la tension aux bornes de la deuxième batterie. L'alternateur ne débite alors quasiment pas de courant électrique, et la consommation des appareils électriques du véhicule est donc assurée par les première et deuxième batteries B1 et B2. D'ailleurs, pendant chacun de ces intervalles temporels 41 et 42, on observe que les niveaux de charge SOC1 et SOC2 des deux batteries diminuent.

L'intervalle temporel 43 représenté sur cette figure comprend quant à lui plusieurs phases de freinage. Lors de chacune de ces phases de freinage, la tension de bord Valt délivrée par l'alternateur (alternateur qui est simulé par le banc électrique) est pilotée de manière à être nettement supérieure à la tension aux bornes de la première batterie et à la tension aux bornes de la deuxième batterie (ces deux tensions étant de toute façon proches, puisque les deux batteries sont connectées en parallèle). En plus de fournir le courant électrique consommé par les appareils électriques du véhicule, l'alternateur recharge alors les première et deuxième batteries, sous un courant électrique élevé (supérieur à 100 ampères, voire à 200 ampères, tout au moins sur de brefs intervalles de temps). On observe d'ailleurs que les niveaux de charge SOC1 et SOC2 des deux batteries augmentent, pendant l'intervalle temporel 43.

Lors de cet essai, on observe surtout que le niveau de charge de la deuxième batterie, SOC2, varie nettement moins que le niveau de charge SOC1 de la première batterie. Mise à part une augmentation progressive peu marquée, qui amène le niveau de charge SOC2 de la deuxième batterie à se stabiliser vers 98%, le niveau de charge de cette batterie ne varie quasiment pas. Au contraire, le niveau de charge SOC1 de la première batterie varie quasiment de 70% à 90%, en augmentant puis en diminuant, lors des différentes phases de freinage et d'accélération.

Cet essai illustre bien l'effet avantageux obtenu grâce à ce couple de batteries, selon lequel la deuxième batterie reste complètement chargée tandis que la première se charge, puise décharge et ainsi de suite, lors d'un fonctionnement de type micro-hybride, et cela alors que les deux batteries restent connectées en parallèle l'une de l'autre.

Les première et deuxième batteries B1 et B2 possèdent par ailleurs d'autres propriétés avantageuses, présentées ci-dessous, et qui interviennent soit en phase de stationnement prolongé du véhicule, soit lors d'un re-couplage entre les première et deuxième batteries (c'est-à-dire lors d'une reconnexion de ces deux batteries l'une avec l'autre).

Tout d'abord, comme le montre la figure 3, la courbe représentant la tension électrique en circuit ouvert U1 aux bornes de la première batterie B1 en fonction de son niveau de charge SOC1, et la courbe représentant la tension électrique en circuit ouvert U2 aux bornes de la deuxième batterie B2 en fonction de son niveau de charge SOC2 se croisent pour un seuil de niveau de charge SOCc compris entre 45% et 75%, ici égal à 60% environ, et, en dessous de ce seuil de niveau de charge SOCc, sur au moins une plage de niveau de charge, à niveau de charge égal, la tension électrique en circuit ouvert U2 de la deuxième batterie B2 est supérieure à la tension électrique en circuit ouvert U1 de la première batterie B1.

Comme on peut le voir sur la figure 3, la plage de niveau de charge, sur laquelle la tension électrique en circuit ouvert U2 de la deuxième batterie B2 est supérieure à la tension électrique en circuit ouvert U1 de la première batterie B1 (à niveau de charge égal), s'étend ici de 5% à 60%.

Grâce à la propriété mentionnée ci-dessus, la première batterie B1 peut être rechargée par la deuxième batterie B2 jusqu'au seuil de niveau de charge SOCc, et cela de manière particulièrement simple, en connectant directement ces deux batteries en parallèle l'une de l'autre.

Lors d'un stationnement prolongé, si l'unité de commande 5 détermine que le niveau de charge de la première batterie risque de n'être pas suffisant pour faire démarrer le moteur à combustion interne 3, elle peut alors commander les deuxième et troisième interrupteurs dans leur état de fermeture. La deuxième batterie rechargeant alors la première batterie jusqu'au seuil de niveau de charge SOCc, dont la valeur (ici 60%) est généralement suffisante pour faire démarrer le moteur à combustion interne (sauf dans les régions où règne un climat très froid, pour lesquelles le convertisseur de tension 12 optionnel est souhaitable).

Par ailleurs, les première et deuxième batteries B1 et B2 sont telles qu'un écart relatif entre :
- la tension électrique en circuit ouvert U1 aux bornes de la première batterie B1 lorsque son niveau de charge est de 50% d'une part, et
- la tension électrique en circuit ouvert U2 aux bornes de la deuxième batterie B2 lorsque son niveau de charge est de 80% d'autre part,
est inférieur à 5%.

Pour l'exemple de couple de batteries considéré ici (figure 3), les deux tensions électriques mentionnées ci-dessus valent respectivement 13 volts et 13,35 volts, soit un écart relatif d'environ 2,5%.

Après une phase de stationnement prolongé, une fois que moteur à démarré et que la deuxième batterie a été rechargée par l'alternateur 7, son niveau de charge est de 80% voire plus, tandis que la première batterie peut n'avoir qu'un niveau de charge intermédiaire, de l'ordre de 50%. Dans cette situation, comme l'écart entre les tensions respectives aux bornes des deux batteries est faible, elles peuvent être connectées l'une à l'autre en parallèle sans que cela n'entraine de transfert de charge notable entre les deux batteries. Les pertes d'énergie électrique (pertes résistives) que pourrait entraîner ce re-couplage des première et deuxième batteries, l'une avec l'autre, sont ainsi réduites. De plus, réduire ainsi l'intensité du courant électrique qui traverse le deuxième interrupteur lors de la reconnexion de la première batterie B1 (lors de la fermeture de cet interrupteur) permet d'augmenter la durée de vie de cet interrupteur.

### Pilotage des interrupteurs commandés et de l'alternateur

La manière dont est programmée l'unité de commande 5, qui pilote les interrupteurs commandés K1 à K5 du circuit électrique ainsi que l'alternateur 7 et le convertisseur de tension 12 optionnel, peut maintenant être décrite plus en détail.

Le pilotage des interrupteurs commandés est présenté tout d'abord de manière globale, avant de décrire plus en détail les différentes phases de fonctionnement du véhicule.

### Présentation d'ensemble du pilotage des interrupteurs.

L'unité de commande 5 est programmée pour commander le premier interrupteur K1 dans son état de fermeture pour faire démarrer le moteur à combustion interne 3 (en alimentant le démarreur 4 avec la première batterie B1), et cela qu'il s'agisse d'un démarrage "à froid" du moteur (c'est à dire après un stationnement prolongé), ou d'un démarrage à chaud (c'est à dire après un bref arrêt du moteur, de quelques minutes au plus). Mis à part lors du démarrage du moteur à combustion interne, le premier interrupteur K1 est ouvert.

L'unité de commande 5 est programmée par ailleurs pour commander le quatrième interrupteur K4 dans son état de fermeture pendant une courte période, juste après le démarrage du moteur à combustion interne 3, afin de pour chauffer le pot catalytique (en alimentant son système de chauffage 9 avec la première batterie B1). Le reste du temps, le quatrième interrupteur K4 est dans son état d'ouverture.

L'unité de commande 5 est programmée aussi pour commander le cinquième interrupteur K5 dans son état de fermeture pendant une courte période précédant le démarrage du moteur, et éventuellement juste après ce démarrage, pour chauffer la deuxième batterie B2, lorsque sa température est inférieure à une température limite, égale ici à 10 degrés Celsius. Ainsi, dès qu'une intention de démarrage du moteur à combustion interne 3 a été détectée par l'unité de commande 5 (par exemple, dès l'ouverture ou le déverrouillage des portes du véhicule), si la température de la deuxième batterie est inférieure à cette température limite, l'unité de commande 5 commande le cinquième interrupteur dans son état de fermeture jusqu'à ce que la température T2 de la deuxième batterie atteigne cette température limite. En dehors de cette période, le cinquième interrupteur K5 est ouvert.

Quant au troisième interrupteur K3, il est presque constamment fermé, mettant ainsi en contact la deuxième batterie B2 avec les équipements de bord 6 du véhicule, l'unité de commande 5 et l'alternateur 7. L'unité de commande 5 est toutefois programmée pour commander cet interrupteur dans son état d'ouverture si, lors d'un stationnement prolongé du véhicule, le niveau de charge SOC2 de la deuxième batterie devient inférieur à un niveau de charge minimal de réserve SOC2ₘᵢₙ, égal ici à 10%. Quoiqu'il en soit, dès que le moteur à combustion interne 3 a démarré, le troisième interrupteur K3 est fermé, et la deuxième batterie est en contact avec la deuxième borne du circuit, d'un point de vue électrique, et cela pendant tout le trajet ultérieur du véhicule.

Enfin, l'unité de commande 5 est programmée pour commander le deuxième interrupteur K2 dans son état d'ouverture :
- en phase de stationnement prolongé du véhicule, pour préserver la charge de la première batterie B1,
- lors du démarrage du moteur à combustion interne, ou lors du chauffage du pot catalytique (pour ne pas entraîner de chute de la tension électrique qui alimente les équipements de bord), et
- après démarrage du moteur à combustion interne, tant que les première et deuxième batteries n'ont pas été re-couplées l'une à l'autre.

Une fois que les première et deuxième batteries ont été re-couplées, le deuxième interrupteur K2 reste fermé, les première et deuxième batteries restant alors connectées en parallèle l'une de l'autre (et cela notamment lorsque le véhicule fonctionne en mode micro-hybride, ou lorsqu'il se déplace avec son moteur à combustion interne éteint).

L'unité de commande 5 peut aussi commander le deuxième interrupteur dans son état de fermeture, lors d'un stationnement prolongé du véhicule, s'il s'avère nécessaire que la deuxième batterie recharge la première batterie (pour assurer le démarrage ultérieur du moteur à combustion interne).

### Phase de stationnement prolongé du véhicule : gestion et maintien du niveau de charge de la première batterie B1

Comme indiqué ci-dessus, lors d'un stationnement prolongé du véhicule, les premier et deuxième interrupteurs K1 et K2 son généralement ouverts, tandis que le troisième interrupteur K3 est fermé.

Le courant électrique de veille consommé par les équipements de bord 6 et par l'unité de commande 5 est alors fourni par la deuxième batterie B2, tandis que la première batterie B1 ne débite pas de courant. Le niveau de charge SOC1 de la première batterie électrique est donc conservé pendant cette phase (il ne diminue pas ou quasiment pas), et reste ainsi entièrement disponible pour un démarrage ultérieur du moteur à combustion interne 3.

Mais il peut s'avérer que le niveau de charge initial de la première batterie B1, au début d'une telle phase de stationnement, ne soit pas suffisant pour permettre un démarrage ultérieur du moteur à combustion interne 3, en particulier si la température extérieure est très basse, par exemple inférieure à -20 degrés Celsius.

Pour remédier à ce problème, l'unité de commande 5 est programmée pour, lors d'un stationnement prolongé du véhicule 1 :
- acquérir une donnée représentative d'une température T1 de la première batterie B1, et une donnée représentative de son niveau de charge SOC1,
- sur la base desdites données, comparer le niveau de charge de la première batterie SOC1 avec un niveau de charge de démarrage SOC1_{dem}, qui est le plus petit niveau de charge pour lequel la première batterie B1, à la température T1, est apte à faire démarrer le moteur à combustion interne 3 (le moteur étant lui aussi à la température T1, en pratique), et
- lorsque cette comparaison montre que le niveau de charge de la première batterie SOC1 est inférieur audit niveau de charge de démarrage SOC1_{dem}, pour commander le deuxième interrupteur K2 dans son état de fermeture, ou pour mettre le convertisseur de tension 12 en fonctionnement (afin qu'il procure l'augmentation de tension mentionnée plus haut), de manière à ce que la deuxième batterie B2 recharge la première batterie B1.

Plus précisément, lorsque l'unité de commande 5 détermine que le niveau de charge de démarrage de démarrage SOC1_{dem} est inférieur au seuil de niveau de charge SOCc (égal ici à 60%), elle commande le deuxième interrupteur K2 dans son état de fermeture. Le convertisseur de tension 12 reste alors à l'arrêt. La première batterie B1 est alors rechargée par la deuxième batterie, jusqu'au seuil de niveau de charge SOCc, simplement du fait que la tension aux bornes de la deuxième batterie B2 est supérieure à celle aux bornes de la première batterie B1, sur la gamme de niveaux de charge inférieures au seuil SOCc.

Mais si la température T1 de la première batterie, et plus généralement du véhicule, est basse, un niveau de charge égal au seuil SOCc peut n'être pas suffisant pour faire démarrer le moteur à combustion interne 3, et une charge plus complète de la première batterie peut alors être nécessaire. Ainsi, lorsque l'unité de commande 5 détermine que le niveau de charge de démarrage SOC1_{dem} est supérieur au seuil de niveau de charge SOCc, elle commande le deuxième interrupteur K2 dans son état d'ouverture et actionne le convertisseur de tension 12, en le pilotant de manière à ce qu'il délivre une tension de sortie suffisante pour recharger la première batterie B1 jusqu'au niveau de charge souhaité (pour cela, l'unité de commande 5 peut par exemple commander au convertisseur de tension 12 de délivrer en sortie une tension égale à la tension nominale maximale Vmax).

En variante, l'unité de commande pourrait être programmée pour, lorsque le niveau de charge de la première batterie SOC1 est inférieur au niveau de charge de démarrage SOC1_{dem}, actionner alors systématiquement le convertisseur de tension, quelle que soit la valeur du niveau de charge de démarrage SOC1_{dem}, en le pilotant pour qu'il délivre une tension de sortie suffisamment élevée pour recharger la première batterie B1 jusqu'au niveau de charge de démarrage SOC1_{dem}.

Une fois que le niveau de charge de la première batterie SOC1 a atteint le niveau de charge de démarrage SOC1_{dem}, l'unité de commande 5 commande le deuxième interrupteur dans son état d'ouverture, ou commande l'arrêt du convertisseur de tension, si celui-ci avait été mis en fonctionnement.

Comme on peut le voir sur la figure 5, le niveau de charge de démarrage SOC1_{dem} varie assez fortement avec la température. Ici, par exemple, il passe de 40% seulement lorsque la température T1 est de 20 degrés Celsius, à près de 90% lorsque la température T1 est de -30 degrés Celsius. Il est donc particulièrement utile que l'unité de commande 5 vérifie, à intervalles réguliers que le niveau de charge SOC1 de la première batterie B1 est supérieur au niveau de charge de démarrage SOC1_{dem}. En effet, un niveau de charge initial de la première batterie, suffisant en début de phase de stationnement pour faire démarrer le moteur, peut devenir ensuite insuffisant (même s'il n'a pas diminué), suite à une chute de la température de l'environnement du véhicule 1.

En plus d'éviter une décharge la première batterie B1 lors d'un stationnement prolongé, le circuit électrique 2 permet donc, si cela s'avère nécessaire, de recharger cette batterie pour qu'elle dispose d'un niveau de charge suffisant pour un démarrage ultérieur du moteur à combustion interne 3.

Grâce à cela, la capacité de charge totale de la première batterie B1 peut être réduite au minimum nécessaire pour faire démarrer le moteur à combustion interne 3 (puisque la première batterie est, si besoin, chargée complètement par la deuxième batterie, préalablement à un tel démarrage). La première batterie B1 peut ainsi être dimensionnée au plus juste, au lieu d'être surdimensionnée comme c'est le cas habituellement.

Réduire ainsi les dimensions de la première batterie B1 est particulièrement intéressant, car cela permet de loger facilement cette batterie dans le compartiment moteur 10 (qui est par ailleurs occupé par de nombreux organes du véhicule, souvent encombrants, et dont l'agencement les uns par rapport aux autres est complexe).

A titre d'exemple, dans le mode de réalisation décrit ici, la capacité de charge de la deuxième batterie B2 est de 30 ampères-heures environ, tandis que celle de la première batterie B1 a pu être réduite à seulement de 10 ampères-heures environ.

De plus, le fait d'alimenter les appareils électriques du véhicule 1 avec la deuxième batterie B2 seulement, pendant les phases de stationnement prolongé, permet de standardiser les dimensions de la première batterie B1, indépendamment des équipements de bord, optionnels, qui équipent le véhicule. Autrement formulé, cela permet de dimensionner la première batterie B1 en fonction seulement des caractéristiques du moteur à combustion interne 3 et de son démarreur 4. Cette standardisation contribue à la simplicité d'installation de la première batterie B1 dans le compartiment moteur 10.

Pour ce qui est des dimensions de la deuxième batterie B2, elles peuvent en revanche varier en fonction du nombre d'équipements de bords dont est muni le véhicule 1 (système de navigation intégré ou non au véhicule, présence ou non d'un système d'ouverture et fermeture électrique des vitres, etc...). Mais cela ne complique que peu l'installation de la deuxième batterie B2 dans le véhicule, puisqu'elle est logée dans une zone où le volume disponible est important (dans le coffre à bagages du véhicule), contrairement à la première batterie.

Comme déjà indiqué, la première batterie B1 est ici du type « NMC/LTO ». Employer ce type technologie (en particulier le fait d'employer des anodes de type « LTO ») permet à cette batterie de résister aux températures élevées régnant dans le compartiment moteur 10, sans se dégrader. Mais, en contrepartie, cela rend cette batterie onéreuse (nettement plus qu'une batterie de même capacité, à anodes en graphite). Réduire au minimum nécessaire les dimensions de la première batterie B1 (en augmentant en contrepartie celles de la deuxième batterie B2) permet donc de réduire le coût du circuit électrique 2 de manière très intéressante.

La durée de vie prévue pour la première batterie B1 peut, dans les conditions d'utilisation décrites ci-dessus, être comparable à celle attendue pour le véhicule 1 lui-même. Cette batterie, qui n'est alors plus une « pièce d'usure » du véhicule, peut donc être installée à demeure dans le compartiment moteur 10, sans avoir à prévoir un accès aisé à cette batterie (puisqu'il est peu probable qu'il faille la remplacer). Cela permet d'agencer les éléments logés dans le compartiment moteur 10 avec plus de liberté.

Quant à la deuxième batterie B2, même si elle est moins robuste que la première, du fait de son positionnement dans le coffre à bagages (dans un logement comparable à celui de la roue de secours par exemple), elle est facilement accessible et peut être remplacée aisément.

S'agissant maintenant de la gestion du niveau de charge SOC2 de la deuxième batterie, l'unité de commande 5 est programmée pour, en phase de stationnement prolongé du véhicule, à intervalles réguliers (par exemple toutes les 3 ou 4 heures) :
- acquérir une donnée représentative du niveau de charge de la deuxième batterie SOC2,
- sur la base de ladite donnée acquise, comparer le niveau de charge de la deuxième batterie SOC2 avec au niveau de charge minimal de réserve SOC2ₘᵢₙ mentionné plus haut, et
- lorsque cette comparaison montre que le niveau de charge de la deuxième batterie SOC2 est inférieur ou égal au niveau de charge minimal de réserve SOC2ₘᵢₙ, pour commander le troisième interrupteur K3 dans son état d'ouverture.

La deuxième batterie B2 est alors déconnectée des différents appareils électriques du véhicule, ce qui permet d'éviter que son niveau de charge SOC2 ne baisse en dessous du niveau de charge minimal de réserve SOC2ₘᵢₙ. Dans une telle situation, le circuit électrique 2 ne fournit plus le courant électrique de veille nécessaire au fonctionnement des équipements de bord 6 du véhicule 1, et certaines fonctionnalités du véhicule ne sont alors pas disponibles (par exemple, les portières du véhicule doivent alors être déverrouillées manuellement au moyen d'une clef mécanique, et un démarrage manuel du moteur à combustion interne 3 - par exemple au moyen d'une clef de contact - est nécessaire). Cela permet en contrepartie d'éviter une décharge totale de la deuxième batterie B2, qui pourrait affecter les possibilités de démarrage ultérieur du moteur à combustion interne, ou qui pourrait dégrader la deuxième batterie.

Toujours à propos du pilotage réalisé par l'unité de commande 5, il est noté que cette unité de commande 5 est apte à déterminer, d'elle-même, que le véhicule est en stationnement prolongé, c'est-à-dire en veille. Dans le mode de réalisation décrit ici, l'unité de commande 5 est programmée plus précisément pour :
- détecter que le véhicule a reçu une commande de mise en veille (par exemple en cas de réception d'une commande de verrouillage centralisé provenant d'une télécommande de verrouillage, telle qu'une clef de type « plip »), et/ou détecter qu'un badge de déverrouillage du véhicule n'est plus situé dans le véhicule ou dans un voisinage délimité donné de celui-ci, et
- en cas de détection, pour déterminer qu'un stationnement prolongé du véhicule débute.

En variante ou en complément, l'unité de commande 5 pourrait être programmée pour :
- détecter que le moteur à combustion interne 3 est éteint et que le véhicule 1 est inoccupé et/ou détecter que le moteur à combustion interne 3 est éteint et que le frein de parking est serré, et
- en cas de détection, pour déterminer que le véhicule est en stationnement prolongé.

### Phase de recharge de la deuxième batterie électrique

Dès que le moteur à combustion interne 3 a démarré, il entraine l'alternateur 7, qui recharge alors la deuxième batterie B2.

Mais il faut éviter de recharger cette batterie à anode au graphite avec un courant de charge élevé lorsque sa température est basse (typiquement inférieure à 10 degrés Celsius).

Comme déjà indiqué, lorsque la température T2 de la deuxième batterie B2 est inférieure à une température limite (ici de de 10 degrés Celsius) et qu'une intention de démarrer est détectée, son système de chauffage 8 est actionné (en fermant le cinquième interrupteur K5). Mais ce dispositif de chauffage 8 met un certain temps pour amener sa température T2 au dessus de la température limite en question, alors que la charge de la deuxième batterie débute dès le démarrage du moteur à combustion interne 3.

Pour éviter alors de recharger la deuxième batterie avec un courant électrique trop élevé, qui pourrait la détériorer, l'unité de commande 5 pilote l'alternateur 7 de manière à ce que la tension électrique de bord Valt qu'il délivre cause une recharge de la deuxième batterie B2 sous un courant électrique de charge 12 limité, inférieur à un courant électrique maximal admissible pour cette batterie à la température T2 considérée.

Ce courant électrique maximal admissible est le courant électrique limite au-delà duquel du Lithium se dépose sur les anodes en graphite de la deuxième batterie. Sa valeur décroit lorsque la température de la deuxième batterie diminue, et lorsque son niveau de charge SOC2 approche de 100%, imposant une recharge de la deuxième batterie sous un courant modéré. La valeur du courant électrique maximal admissible est déterminée par l'unité de commande 5, en fonction notamment de la température T2 de la deuxième batterie et de son niveau de charge SOC2.

Une fois que la température T2 de la deuxième batterie B2 a atteint la température limite précitée, l'unité de commande peut par exemple commander l'alternateur 7 pour que la tension de bord Valt qu'il délivre soit égale à la tension en circuit ouvert aux bornes de la deuxième batterie B2 pour un niveau de charge de 100% de cette batterie (cette tension étant ici égale à 14,2 volts), ou pour que la tension de bord Valt soit égale à la tension nominale maximale Vmax.

### Couplage des première et deuxième batteries

Une fois que la deuxième batterie B2 a été complètement ou presque complètement chargée, la première batterie B1 est reconnectée à la deuxième batterie B2, en parallèle.

L'unité de commande 5 est programmée pour, avant cette reconnexion, piloter l'alternateur 7 de manière à ce que la tension électrique de bord Valt qu'il délivre prenne une valeur intermédiaire entre la tension électrique aux bornes de la première batterie B1 et la tension électrique aux bornes de la deuxième batterie B2.

Par exemple, si la tension aux bornes de la deuxième batterie B2 vaut 13,4 volts, après l'avoir rechargée (ce qui correspond ici à un niveau de charge SOC2 de 95%), tandis que la tension aux bornes de la première batterie B1 vaut 13 volts (ce qui correspond ici à un niveau de charge SOC1 de 50%, pour cette batterie), l'unité de commande 5 commandera alors la tension de bord Valt à une valeur égale à 13,2 volts environ.

Cela permet, avant de fermer le deuxième interrupteur K2, de réduire l'écart entre la tension de bord Valt et la tension aux bornes de la première batterie B1 (tout en conservant une tension de bord proche de la tension aux bornes de la deuxième batterie). Le courant électrique « de court-circuit », qui apparait lors de la fermeture du deuxième interrupteur (et qui traverse cet interrupteur), est alors d'intensité limitée, ce qui réduit les pertes par effet Joule causées par cette reconnexion, et améliore en outre la durée de vie du deuxième interrupteur.

### Fonctionnement du véhicule en mode micro-hybride

Comme expliqué plus haut, le mode de fonctionnement micro-hybride du véhicule est un mode de fonctionnement dans lequel :
- une partie de l'énergie cinétique du véhicule est convertie par l'alternateur du véhicule en énergie électrique pour la stocker dans la première batterie, lorsque le véhicule freine, ou lorsque le couple moteur demandé par le conducteur diminue; et dans lequel
- l'alternateur est au contraire piloté de manière à délivrer très peu, voire aucun courant électrique, lorsque le rendement du moteur à combustion interne est faible.

En pratique, l'unité de commande 5 peut détecter que le véhicule freine lorsque le conducteur appuie sur la pédale de frein. Une diminution du couple moteur demandé par le conducteur est détectée quand elle lorsque le conducteur appuie moins sur la pédale d'accélération.

En mode micro-hybride, comme déjà indiqué, l'unité de commande 5 commande les deuxième et troisième interrupteurs K2 et K3 dans leur état de fermeture, tandis que les autres interrupteurs, K1, K4 et K5 sont ouverts.

Par ailleurs, l'unité de commande 5 pilote l'alternateur 7 de manière à ce que la tension électrique de bord Valt qu'il délivre soit supérieure aux tensions électriques aux bornes des première et deuxième batteries B1, B2 lorsqu'un freinage est détecté ou lorsqu'une diminution du couple moteur demandé par le conducteur du véhicule est détectée.

Cela permet alors de recharger les batteries B1 et B2 avec le courant électrique débité par l'alternateur 7, qui récupérant ainsi sous forme électrique une partie de l'énergie cinétique du véhicule.

Dans une telle phase de freinage en récupération, la tension électrique de bord Valt peut par exemple être commandée de manière à être égale à la tension nominale maximale Vmax (pour récupérer un maximum d'énergie cinétique).

Par ailleurs, dans ce mode de fonctionnement, l'unité de commande 5 pilote l'alternateur 7 de manière à ce que la tension électrique de bord Valt qu'il délivre soit inférieure aux tensions électriques aux bornes des première et deuxième batteries B1 et B2, lorsque l'unité de commande 5 détermine qu'un rendement du moteur à combustion interne 3 est inférieur à un rendement seuil donné (égal par exemple à 10%).

L'alternateur 7 ne débite alors quasiment pas de courant électrique, réduisant ainsi la puissance mécanique que doit fournir le moteur à combustion interne (ce qui est bien sûr souhaitable, puisque son rendement est alors faible).

A titre d'exemple, dans une telle situation, l'unité de commande peut commander la tension électrique de bord Valt de manière à ce qu'elle soit juste inférieure à la tension aux bornes de la première batterie, ainsi qu'à celle aux bornes de la deuxième batterie. Pour l'exemple de couple de batteries présenté plus haut, une valeur de 13 volts est généralement bien adaptée, pour éviter que l'alternateur ne débite.

En variante, l'unité de commande pourrait être programmée pour piloter le courant délivré par l'alternateur, plutôt que la tension qu'il délivre. Dans le cadre de cette variante, l'unité de commande serait alors programmée pour piloter l'alternateur de manière à ce qu'il ne débite pas de courant électrique, lorsque le rendement du moteur à combustion interne est inférieur au rendement seuil précité.

L'évolution des niveaux de charge respectifs SOC1 et SOC2 des première et deuxième batteries B 1 et B2, lors des cycles de charge et de décharge partielles qui ont lieu en mode micro-hybride, a été présentée en détail plus haut, dans la section qui concerne les caractéristiques de ces batteries (notamment en référence à la figure 4).

### Phase de déplacement avec le moteur à combustion interne éteint

Dans certaines circonstances, en descente, il est prévu d'éteindre le moteur à combustion interne 3 pour économiser du carburant. Le véhicule 1 est alors mû sous l'effet de son propre poids et de son inertie (ce mode de déplacement est parfois appelé « sailing stop » en anglais, ou « arrêt de l'entrainement »).

Dans ce cas, l'unité de commande 5 commande les deuxième et troisième interrupteurs K2 et K3 dans leur état de fermeture, tandis que les autres interrupteurs, K1, K4 et K5 restent ouverts (de même qu'en mode micro-hybride).

Les première et deuxième batteries B1 et B2 fournissent alors le courant électrique nécessaire au fonctionnement des équipements de bord 6 et de l'unité de commande 5 du véhicule.

Après cette phase de déplacement, l'unité de commande 5 commande le deuxième interrupteur K2 dans son état d'ouverture et le premier interrupteur K1 dans son état de fermeture, pour faire redémarrer le moteur à combustion interne 3.

Pendant tout la période où le véhicule 1 roule avec le moteur à combustion interne éteint, il est bien sûr intéressant, pour la sécurité de fonctionnement du véhicule, que le courant électrique qu'il consomme soit fourni par deux batteries distinctes (B1 et B2), qui restent en contact électrique l'une avec l'autre (en parallèle), en permanence.

Différentes variantes peuvent être apportées au circuit électrique et au véhicule décrits ci-dessus.

Tout d'abord, les différents interrupteurs commandés pourraient âtre agencés différemment.

Par exemple, le premier interrupteur commandé pourrait relier la première borne du circuit à sa deuxième borne, au lieu de relier la première borne du circuit directement à la première batterie (même si cela n'est pas optimal en termes de pertes résistives lors du démarrage). D'autre part, les deuxième et troisième interrupteurs pourraient bien sûr être externes aux batteries, au lieu d'être intégrés dans leurs boitiers. Dans un mode de réalisation simplifié, le troisième interrupteur pourrait d'ailleurs être omis, et être remplacé par un conducteur électrique reliant directement la deuxième batterie à la deuxième borne du circuit.

Par ailleurs, d'autres couples de batteries électriques que celui présenté ci-dessus, utilisant d'autres types d'anodes ou de cathodes et/ou un nombre différent de cellules électrochimiques, pourraient être employés, à condition bien sûr que ces couples de batteries possèdent la propriété particulière mentionnée plus haut, selon laquelle, sur au moins une plage de tension électrique en circuit ouvert, à tension électrique égale, le niveau de charge de la deuxième batterie B2 est dans un intervalle correspondant à une charge complète alors que le niveau de charge de la première batterie est dans un intervalle correspondant à une charge partielle.

D'autre part, comme déjà indiqué, le convertisseur de tension 12 est optionnel, et destiné essentiellement aux véhicules devant être utilisés dans des régions où le climat est très froid (où la température descend en dessous de -20 degrés Celsius).

## Revendications

1. Circuit électrique (2) pour un véhicule (1) automobile qui comporte un moteur à combustion interne (3) et des appareils électriques (4, 5, 6), dont un démarreur (4) pour faire démarrer le moteur à combustion interne, le circuit électrique (2) comprenant :
- une première borne (21) à connecter au démarreur (4) pour l'alimenter en courant électrique,
- au moins une deuxième borne (22) à connecter à un autre desdits appareils électriques (5, 6) pour l'alimenter en courant électrique,
- une première batterie (B1) électrique, comprenant un module d'accumulateurs (B11) connecté à la première borne (21) par l'intermédiaire d'un premier interrupteur (K1) commandé et connecté à la deuxième borne (22) par l'intermédiaire d'un deuxième interrupteur (K2) commandé,
- une deuxième batterie (B2) électrique, connectée à la deuxième borne (22), et
- une unité de commande (5) électronique apte à commander les premier et deuxième interrupteurs (K1, K2) commandés,
**caractérisé en ce que** l'unité de commande (5) est programmée pour :
- commander les premier et deuxième interrupteurs (K1, K2) dans un état d'ouverture lorsque le véhicule (1) automobile est en stationnement prolongé,
- commander le premier interrupteur (K1) dans un état de fermeture en phase de démarrage du moteur à combustion interne (3), et
- dans au moins un mode de fonctionnement du véhicule (1) pour lequel le véhicule se déplace, commander le deuxième interrupteur (K2) dans un état de fermeture de manière à connecter les première et deuxième batteries (B1, B2) l'une à l'autre en parallèle, et
**en ce que** les première et seconde batteries sont telles que, lorsque le niveau de charge (SOC2) de la deuxième batterie (B2) est dans un intervalle correspondant à une charge complète (int2), la tension électrique en circuit ouvert (U2) aux bornes de la deuxième batterie (B2) est égale à la tension électrique en circuit ouvert (U1) aux bornes de la première batterie (B1) alors que le niveau de charge de la première batterie (SOC1) est dans un intervalle correspondant à une charge partielle (int1).

2. Circuit électrique (2) selon la revendication 1, dans lequel, sur au moins une plage de tension électrique en circuit ouvert correspondant à une charge complète de la deuxième batterie (B2), une même variation de tension électrique en circuit ouvert (ΔU) correspond, pour la première batterie (B1), à une première variation de niveau de charge (ΔSOC1), et, pour la deuxième batterie (B2), à une deuxième variation de niveau de charge (ΔSOC2) inférieure à la première variation de niveau de charge (ΔSOC1).

3. Circuit électrique (2) selon l'une des revendications 1 et 2, comprenant en outre un alternateur (7) à accoupler au moteur à combustion interne (3), et dans lequel l'unité de commande (5) électronique est programmée pour, dans ledit mode de fonctionnement, piloter l'alternateur (7) pour que la tension électrique de bord (Valt) qu'il délivre soit :
- supérieure aux tensions électriques aux bornes des première et deuxième batteries (B1, B2) lorsqu'un freinage est détecté ou lorsqu'une diminution du couple moteur demandé par le conducteur du véhicule est détectée, et soit
- inférieure aux tensions électriques aux bornes des première et deuxième batteries (B1, B2) lorsqu'il est déterminé qu'un rendement du moteur à combustion interne (3) est inférieur à un rendement seuil donné.

4. Circuit électrique (2) selon l'une des revendications 1 à 3, dans lequel :
- la courbe représentant la tension électrique en circuit ouvert (U1) aux bornes de la première batterie (B1) en fonction de son niveau de charge (SOC1), et la courbe représentant la tension électrique en circuit ouvert (U2) aux bornes de la deuxième batterie (B2) en fonction de son niveau de charge (SOC2) se croisent pour un seuil de niveau de charge (SOCc) compris entre 45 pour cent et 75 pour cent, et dans lequel,
- en dessous dudit seuil de niveau de charge (SOCc), et sur au moins une plage de niveau de charge, à niveau de charge égal, la tension électrique en circuit ouvert (U2) de la deuxième batterie (B2) est supérieure à la tension électrique en circuit ouvert (U1) de la première batterie (B1).

5. Circuit électrique (2) selon l'une des revendications 1 à 4, dans lequel un écart relatif entre :
- la tension électrique en circuit ouvert (U1) aux bornes de la première batterie (B1) lorsque son niveau de charge est de 50 pour cent d'une part, et
- la tension électrique en circuit ouvert (U2) aux bornes de la deuxième batterie (B2) lorsque son niveau de charge est de 80 pour cent d'autre part,
est inférieur à 5 pour cent.

6. Circuit électrique (2) selon l'une des revendications 1 à 5, comprenant l'alternateur (7) à accoupler au moteur à combustion interne (3), et dans lequel l'unité de commande (5) électronique est programmée pour :
- après un démarrage à froid du moteur à combustion interne (3), commander le deuxième interrupteur dans son état d'ouverture et piloter l'alternateur de manière à ce qu'il recharge la deuxième batterie (B2),
- puis pour piloter l'alternateur (7) de manière à ce que la tension électrique de bord (Valt) qu'il délivre prenne une valeur intermédiaire entre la tension électrique aux bornes de la première batterie (B1) et la tension électrique aux bornes de la deuxième batterie (B2),
- puis pour commander le deuxième interrupteur (K2) dans son état de fermeture.

7. Circuit électrique (2) selon l'une des revendications 1 à 6, dans lequel le premier interrupteur (K1) connecte la première borne (21) du circuit à une borne commune (23) du module d'accumulateurs (B21) de la première batterie (B1) et dans lequel le deuxième interrupteur (K2) connecte la deuxième borne (22) du circuit à cette même borne commune (23), de manière à ce que le courant électrique délivré par le circuit par sa première borne (21) traverse seulement le premier interrupteur (K1).

8. Circuit électrique (2) selon l'une des revendications 1 à 7, comprenant en outre un convertisseur de tension électrique (12) dont l'entrée est connectée électriquement à la deuxième batterie (B2) et dont la sortie est connectée électriquement à la première batterie (B1), le convertisseur (12) étant configuré pour délivrer une tension électrique de sortie supérieure à sa tension électrique d'entrée.

9. Véhicule (1) automobile comprenant un moteur à combustion interne (3), des appareils électriques (4, 5, 6) dont un démarreur (4) pour faire démarrer le moteur à combustion interne, et un circuit électrique (2) tel que défini par l'une des revendications 1 à 8.

10. Véhicule (1) automobile selon la revendication 9, comprenant un compartiment moteur (10), dans lequel la première batterie (B1) est logée dans le compartiment moteur (10), et dans lequel la deuxième batterie (B2) est logée hors du compartiment moteur (10).

## Patentansprüche

1. Schaltkreis (2) für ein Kraftfahrzeug (1), das einen Verbrennungsmotor (3) und elektrische Geräte (4, 5, 6) aufweist, darunter einen Starter zum Starten des Verbrennungsmotors, wobei der Schaltkreis (2) umfasst:
- eine erste Klemme (21), die mit dem Starter (4) zu verbinden ist, um ihn mit elektrischem Strom zu versorgen,
- mindestens eine zweite Klemme (22), die mit einem anderen der elektrischen Geräte (5, 6) zu verbinden ist, um es mit elektrischem Strom zu versorgen,
- eine erste elektrische Batterie (B1), die ein Akkumulatormodul (B11) umfasst, das mit der ersten Klemme (21) über einen ersten gesteuerten Schalter (K1) verbunden ist und mit der zweiten Klemme (22) über einen zweiten gesteuerten Schalter (K2) verbunden ist,
- eine zweite elektrische Batterie (B2), die mit der zweiten Klemme (22) verbunden ist, und
- eine elektronische Steuerungseinheit (5), die geeignet ist, die ersten und zweiten gesteuerten Schalter (K1, K2) zu steuern, **dadurch gekennzeichnet, dass** die Steuerungseinheit (5) dazu programmiert ist:
- die ersten und zweiten Schalter (K1, K2) in einen Öffnungszustand zu steuern, wenn das Kraftfahrzeug (1) längere Zeit geparkt ist,
- den ersten Schalter (K1) in der Startphase des Verbrennungsmotors (3) in einen Schließzustand zu steuern und
- in mindestens einer Betriebsart des Fahrzeugs (1), bei der sich das Fahrzeug fortbewegt, den zweiten Schalter (K2) in einen Schließzustand zu steuern, so dass die ersten und zweiten Batterien (B1, B2) parallel zueinander geschaltet werden, und dadurch, dass die ersten und zweiten Batterien derart sind, dass, wenn der Ladezustand (SOC2) der zweiten Batterie (B2) in einem Intervall liegt, das einer vollständigen Ladung (int2) entspricht, die elektrische Leerlaufspannung (U2) an den Klemmen der zweiten Batterie (B2) gleich der elektrischen Leerlaufspannung (U1) an den Klemmen der ersten Batterie (B1) ist, während der Ladezustand der ersten Batterie (SOC1) in einem Intervall liegt, das einer Teilladung (int1) entspricht.

2. Schaltkreis (2) nach Anspruch 1, bei dem, über mindestens einen elektrischen Leerlaufspannungsbereich, der einer vollständigen Ladung der zweiten Batterie (B2) entspricht, eine selbe Änderung der elektrischen Leerlaufspannung (△U) bei der ersten Batterie (B1) einer ersten Änderung des Ladezustands (△SOC1) entspricht und bei der zweiten Batterie (B2) einer zweiten Änderung des Ladezustands (△SOC2) entspricht, die geringer als die erste Änderung des Ladezustands (△SOC1) ist.

3. Schaltkreis (2) nach einem der Ansprüche 1 und 2, der ferner einen an den Verbrennungsmotor (3) zu koppelnden Wechselstromgenerator (7) umfasst und bei dem die elektronische Steuerungseinheit dazu programmiert ist, in der Betriebsart den Wechselstromgenerator (7) anzusteuern, damit die elektrische Bordspannung (Valt), die er abgibt:
- höher als die elektrischen Spannungen an den Klemmen der ersten und zweiten Batterien (B1, B2) ist, wenn eine Bremsung detektiert wird oder wenn eine Verringerung des von dem Fahrer des Fahrzeugs angeforderten Motormoments detektiert wird, und
- niedriger als die elektrischen Spannungen an den Klemmen der ersten und zweiten Batterien (B1, B2) ist, wenn festgestellt wird, dass ein Wirkungsgrad des Verbrennungsmotors (3) geringer als ein gegebener Schwellenwirkungsgrad ist.

4. Schaltkreis (2) nach einem der Ansprüche 1 bis 3, bei dem:
- die Kennlinie, welche die elektrische Leerlaufspannung (U1) an den Klemmen der ersten Batterie (B1) in Abhängigkeit von ihrem Ladezustand (SOC1) repräsentiert, und die Kennlinie, welche die elektrische Leerlaufspannung (U2) an den Klemmen der zweiten Batterie (B2) in Abhängigkeit von ihrem Ladezustand (SOC2) repräsentiert, sich bei einem Ladezustandsschwellenwert (SOCc) zwischen 45 Prozent und 75 Prozent kreuzen, und bei dem,
- unterhalb des Ladezustandsschwellenwerts (SOCc) und über mindestens einen Ladezustandsbereich, bei gleichem Ladezustand, die elektrische Leerlaufspannung (U2) der zweiten Batterie (B2) höher als die elektrische Leerlaufspannung (U1) der ersten Batterie (B1) ist.

5. Schaltkreis (2) nach einem der Ansprüche 1 bis 4, bei dem eine relative Abweichung zwischen:
- der elektrischen Leerlaufspannung (U1) an den Klemmen der ersten Batterie (B1), wenn ihr Ladezustand 50 Prozent beträgt, zum einen und
- der elektrischen Leerlaufspannung (U2) an den Klemmen der zweiten Batterie (B2), wenn ihr Ladezustand 80 Prozent beträgt, zum anderen, weniger als 5 Prozent beträgt.

6. Schaltkreis (2) nach einem der Ansprüche 1 bis 5, der den an den Verbrennungsmotor (3) zu koppelnden Wechselstromgenerator (7) umfasst und bei dem die elektronische Steuerungseinheit (5) dazu programmiert ist:
- nach einem Kaltstart des Verbrennungsmotors (3) den zweiten Schalter in seinen Öffnungszustand zu steuern und den Wechselstromgenerator so anzusteuern, dass er die zweite Batterie (B2) auflädt,
- dann den Wechselstromgenerator (7) so anzusteuern, dass die von ihm abgegebene elektrische Bordspannung (Valt) einen Zwischenwert zwischen der elektrischen Spannung an den Klemmen der ersten Batterie (B1) und der elektrischen Spannung an den Klemmen der zweiten Batterie (B2) annimmt,
- dann den zweiten Schalter (K2) in seinen Schließzustand zu steuern.

7. Schaltkreis (2) nach einem der Ansprüche 1 bis 6, bei dem der erste Schalter (K1) die erste Klemme (21) des Kreises mit einer gemeinsamen Klemme (23) des Akkumulatormoduls (B21) der ersten Batterie (B1) verbindet und bei dem der zweite Schalter (K2) die zweite Klemme (22) des Kreises mit derselben gemeinsamen Klemme (23) verbindet, so dass der von dem Kreis über seine erste Klemme (21) abgegebene elektrische Strom nur durch den ersten Schalter (K1) fließt.

8. Schaltkreis (2) nach einem der Ansprüche 1 bis 7, der ferner einen elektrischen Spannungswandler (12) umfasst, dessen Eingang elektrisch mit der zweiten Batterie (B2) verbunden ist und dessen Ausgang elektrisch mit der ersten Batterie (B1) verbunden ist, wobei der Wandler (12) dazu ausgestaltet ist, eine elektrische Ausgangsspannung abzugeben, die höher als seine elektrische Eingangsspannung ist.

9. Kraftfahrzeug (1), umfassend einen Verbrennungsmotor (3), elektrische Geräte (4, 5, 6), darunter einen Starter (4) zum Starten des Verbrennungsmotors, und einen Schaltkreis (2) wie in einem der Ansprüche 1 bis 8 definiert.

10. Kraftfahrzeug (1) nach Anspruch 9, umfassend einen Motorraum (10), wobei die erste Batterie (B1) in dem Motorraum (10) untergebracht ist und wobei die zweite Batterie (B2) außerhalb des Motorraums (10) untergebracht ist.

## Claims

1. Electrical circuit (2) for a motor vehicle (1) that comprises an internal combustion engine (3) and electrical devices (4, 5, 6), including a starter (4) for starting the internal combustion engine, the electrical circuit (2) comprising:
- a first terminal (21) to be connected to the starter (4) in order to supply electric current thereto,
- at least one second terminal (22) to be connected to another of said electrical devices (5, 6) in order to supply electric current thereto,
- a first electric battery (B1), comprising an accumulator module (B11) connected to the first terminal (21) by way of a first controlled switch (K1) and connected to the second terminal (22) by way of a second controlled switch (K2),
- a second electric battery (B2), connected to the second terminal (22), and
- an electronic control unit (5) able to control the first and second controlled switches (K1, K2),
**characterized in that** the control unit (5) is programmed to:
- control the first and second switches (K1, K2) into an open state when the motor vehicle (1) is in a prolonged parked state, and
- control the first switch (K1) into a closed state in a phase of starting the internal combustion engine (3), and
- in at least one operating mode of the vehicle (1) in which the vehicle is moving, control the second switch (K2) into a closed state so as to connect the first and second batteries (B1, B2) to one another in parallel, and **in that** the first and second batteries are such that, when the state of charge (SOC2) of the second battery (B2) is within an interval corresponding to a full charge (int2), the open-circuit voltage (U2) across the terminals of the second battery (B2) is equal to the open-circuit voltage (U1) across the terminals of the first battery (B1), while the state of charge (SOC1) of the first battery is within an interval corresponding to a partial charge (int1).

2. Electrical circuit (2) according to Claim 1, wherein, over at least one open-circuit voltage range corresponding to a full charge of the second battery (B2), an identical open-circuit voltage variation (△U) corresponds, for the first battery (B1), to a first state of charge variation (△SOC1), and, for the second battery (B2), to a second state of charge variation (△SOC2) less than the first state of charge variation (△SOC1).

3. Electrical circuit (2) according to either of Claims 1 and 2, furthermore comprising an alternator (7) to be coupled to the internal combustion engine (3), and wherein the electronic control unit (5) is programmed, in said operating mode, to drive the alternator (7) such that the on-board voltage (Valt) that it delivers is either:
- greater than the voltages across the terminals of the first and second batteries (B1, B2) when braking is detected or when a decrease in the engine torque requested by the driver of the vehicle is detected, or
- less than the voltages across the terminals of the first and second batteries (B1, B2) when it is determined that an efficiency of the internal combustion engine (3) is less than a given threshold efficiency.

4. Electrical circuit (2) according to one of Claims 1 to 3, wherein:
- the curve representing the open-circuit voltage (U1) across the terminals of the first battery (B1) as a function of its state of charge (SOC1), and the curve representing the open-circuit voltage (U2) across the terminals of the second battery (B2) as a function of its state of charge (SOC2) intersect for a state of charge threshold (SOCc) of between 45 percent and 75 percent, and wherein,
- below said state of charge threshold (SOCc), and over at least one state of charge range, at an equal state of charge, the open-circuit voltage (U2) of the second battery (B2) is greater than the open-circuit voltage (U1) of the first battery (B1).

5. Electrical circuit (2) according to one of Claims 1 to 4, wherein a relative deviation between:
- the open-circuit voltage (U1) across the terminals of the first battery (B1) when its state of charge is 50 percent, on the one hand, and
- the open-circuit voltage (U2) across the terminals of the second battery (B2) when its state of charge is 80 percent, on the other hand, is less than 5 percent.

6. Electrical circuit (2) according to one of Claims 1 to 5, comprising the alternator (7) to be coupled to the internal combustion engine (3), and wherein the electronic control unit (5) is programmed to:
- after a cold start of the internal combustion engine (3), control the second switch into its open state and drive the alternator such that it recharges the second battery (B2),
- and then to drive the alternator (7) such that the on-board voltage (Valt) that it delivers adopts an intermediate value between the voltage across the terminals of the first battery (B1) and the voltage across the terminals of the second battery (B2),
- and then to control the second switch (K2) into its closed state.

7. Electrical circuit (2) according to one of Claims 1 to 6, wherein the first switch (K1) connects the first terminal (21) of the circuit to a common terminal (23) of the accumulator module (B21) of the first battery (B1) and wherein the second switch (K2) connects the second terminal (22) of the circuit to this same common terminal (23), such that the electric current delivered by the circuit via its first terminal (21) flows through only the first switch (K1).

8. Electrical circuit (2) according to one of Claims 1 to 7, furthermore comprising a voltage converter (12) the input of which is electrically connected to the second battery (B2) and the output of which is electrically connected to the first battery (B1), the converter (12) being configured to deliver an output voltage greater than its input voltage.

9. Motor vehicle (1) comprising an internal combustion engine (3), electrical devices (4, 5, 6), including a starter (4) for starting the internal combustion engine, and an electrical circuit (2) as defined by one of Claims 1 to 8.

10. Motor vehicle (1) according to Claim 9, comprising an engine compartment (10), wherein the first battery (B1) is housed in the engine compartment (10), and wherein the second battery (B2) is housed outside the engine compartment (10).
